# EUROPÄISCHE PATENTSCHRIFT

(11) **EP 1 693 687 B1**
(45) Veröffentlichungstag und Bekanntmachung des Hinweises auf die Patenterteilung: **13.04.2011**
(21) Anmeldenummer: 05022533.3
(22) Anmeldetag: 15.10.2005
(51) Int. Cl.: G01V 9/00

(54) **Luftgestütztes Verfahren zur Exploration von Kohlenwasserstoffvorkommen**
Airborne method for exploration of hydrocarbon deposits
Procédé aéroporté destiné à l exploration de la présence d'hydrocarbures

(30) Priorität: 18.02.2005 DE 102005007724
(43) Veröffentlichungstag der Anmeldung: 23.08.2006
(73) Patentinhaber: Meurer, Heinrich, 50321 Brühl (DE)
(72) Erfinder: Meurer, Heinrich, 50321 Brühl (DE)
(74) Vertreter: Fritz & Brandenburg Patentanwälte

(56) Entgegenhaltungen:
- EP-A- 1 416 258
- WO-A1-97/03201
- GB-A- 2 112 930
- US-A- 3 961 187
- US-A- 5 972 638
- FIGUEIRA M M ET AL: "Production of green fluorescent protein by the methylotrophic bacterium Methylobacterium extorquens", FEMS MICROBIOLOGY LETTERS, BLACKWELL PUBLISHING, AMSTERDAM, NL, vol. 193, no. 2, 1 January 2000 (2000-01-01), pages 195-200, XP002232409, ISSN: 0378-1097

## Beschreibung

Die vorliegende Erfindung betrifft ein luftgestütztes Verfahren zur Exploration von Kohlenwasserstoffvorkommen, insbesondere Erdöl- oder Gaslagerstätten unter Einsatz von Fluoreszenzverfahren einschließlich luftgestützter Georeferenzierung der Fundorte mittels eines digitalen Geländemodells, wobei Kohlenwasserstoff sensible Biosensoren zum Einsatz kommen.

Es ist bekannt, daß es bei natürlichen Lagerstätten von Kohlenwasserstoffvorkommen wie Erdöl- oder Gaslagerstätten zum natürlichen Austritt von flüssigen oder gasförmigen Kohlenwasserstoffen an die Oberfläche kommt. Man unterscheidet hierbei grundsätzlich zwischen sogenannten Microseeps sowie Macroseeps.

Unter Macroseeps werden dabei im Wesentlichen natürliche Austritte von Erdöl in flüssiger Form an der Erdoberfläche verstanden. Macroseeps treten vorwiegend im Zusammenhang mit oberflächennahen Lagerstätten auf. Seit der Antike dienten derartige Macroseeps zur Gewinnung von Erdölprodukten. Später wurden derartige bereits visuell erkennbare Macroseeps als Indikatoren für Erdöllagerstätten genutzt, um somit den Ort von erfolgversprechenden Erdölbohrungen fest zu legen.

Unter Microseeps versteht man geringste Spuren von flüssigen oder gasförmigen Kohlenwasserstoffen, die aus den Lagerstätten, insbesondere auch aus tiefer liegenden Lagerstätten an die Oberfläche aufsteigen. Insbesondere treten derartige Microseeps auf, soweit die geologischen Strukturen den Auftrieb leichter Kohlenwasserstoffe in Salz- oder Süßwasser gefülltem permeablen Gestein unterstützen. Das Auftreten von Microseeps ist jedoch nicht auf das Vorliegen derartiger geologischer Strukturen beschränkt. So entstehen Microseeps insbesondere der kurzkettigen Kohlenwasserstoffe auch durch Diffusionsprozesse. Im Idealfall eines homogenen Gesteines zeigt ein Mikroseep an der Erdoberfläche eine kreisförmige Ausgestaltung mit einer zunehmenden Konzentration des Kohlenwasserstoffes in Richtung Kreismittelpunkt.

Zur Exploration von Macroseeps oder Ölverschmutzungen auf dem Wasser, die in Ihrer Wirkung Macroseeps gleichstehen, sind eine Vielzahl von luftgestützten Explorations- oder Auffindungsmethoden bekannt. Beispielhaft seien hier nur die visuelle Auffindung sowie die Sensor gestützte Auffindung mittels Seitensichtradar, Mikrowellenradiometer, Infrarot-/Ultraviolett-Scanner und Laserfluoreszenz Sensoren genannt. Den zuvor genannten Methoden zur Auffindung von Macroseeps ist gemeinsam, daß erhebliche Mengen von Erdöl an der Oberfläche benötigt werden um detektiert zu werden.

Auf dem Hintergrund des zunehmenden Abbaus von Kohlenwasserstofflagerstätten besteht ein dringendes Bedürfnis nach weiteren Explorationsverfahren, insbesondere nach Explorationsverfahren, die die zuvor genannten Microseeps auffinden.

Es sind Verfahren bekannt zur Auffindung von Microseeps unter Anwendung von Mikroorganismen. So beschreibt die US-A-2,777,799 ein Verfahren zur geomikrobiellen Prospektion von Erdöllagerstätten. Dabei wird von der Tatsache Gebrauch gemacht, daß bestimmte natürliche Mikroorganismen kurzkettige Kohlenwasserstoffverbindungen als Energiequelle nutzen. Gemäß dem dort vorgeschlagenen Verfahren werden Oberflächen nahe Bodenproben genommen und unter Laborbedingungen einer Atmosphäre enthaltend Sauerstoff sowie C¹⁴-markierten Kohlenwasserstoffen ausgesetzt. Nach hinreichender Inkubationszeit wird der metabolisierte C¹⁴-Gehalt gemessen, woraus wieder Rückschlüsse auf den Gehalt an natürlichen Kohlenwasserstoff metabolisierenden Mikroorganismen in der Probe geschlossen wird. Der Gehalt derartiger natürlicher Kohlenwasserstoff metabolisierender Mikroorganismen erlaubt Rückschlüsse auf den natürlichen Gehalt von Kohlenwasserstoffen im Erdreich am Ort der Probennahme und somit als Hinweis auf mögliche Microseeps. Das vorgeschlagene Verfahren zeigt jedoch erhebliche Nachteile. Das Verfahren ist mit erheblichem Aufwand verbunden, was eine zahlenmäßig beschränkte Analyse von Proben und damit ein grobes Probenraster zur Folge hat. Mikroorganismen, die Kohlenwasserstoffverbindungen als Energiequelle nutzen können sind beispielsweise aus den Veröffentlichungen bekannt: Manfred Wagner et al.: "Mikrobielle Prospektion auf Erdöl und Erdgas in Ostdeutschland"; Geologisches Jahrbuch A 149, Seite 287-309; Hannover 1998 sowie Sorkhon et al: "Establishment of oil-degrading bacteria associated with cyanobacteria in oilpolluted soil"; J Appl. Bacteriol. 1995 Feb; 78 (2): 194-9.

Weiterhin ist es bekannt, geeignete Mikroorganismen gentechnisch so zu verändern, daß sie bei Aufnahme von Kohlenwasserstoffen oder Kontakt mit Kohlenwasserstoffen die Eigenschaft zu fluoreszentem Leuchten mittels eines fluoreszenten Proteins exprimieren. Verfahren zur Manipulation geeigneter Mikroorganismen sind Stand der Technik in der Mikrobiologie. So beschreibt Figueira et al.: "Production of green fluorescent protein by methylotrophic bacterium methylobacterium extorquens"; FEMS micro biology letters, volume 123, issue 2, 15. Dezember 2000, pages 195-200, ein entsprechendes Bakterium. Ebenfalls bekannt sind gentechnisch veränderte Mikroorganismen z.B. von Helinga; "Construction of fluorescent biosensor family"; proteine science 2002, 11:2655-2675.

Biosensoren zur Bestimmung von z.B. Sprengstoffen sind aus der DE 41 26 692, WO 02/068473, WO 97/03201 bekannt. Die WO 99/34212 beschreibt ebenfalls Herstellungsverfahren und Verwendung von fluoreszierenden Biosensoren, geeignet zur Sprengstoffdetektion.

Die dort offenbarten Verfahren eignen sich ebenfalls zur Manipulation von geeigneten Mikroorganismen zur Adaption auf eine Sensibilität gegenüber Kohlenwasserstoffen.

→ Einschub Seite 3a

Aufgabe der vorliegenden Erfindung ist es die Nachteile des Standes der Technik zu überwinden und ein Verfahren zur Exploration von Kohlenwasserstoffvorkommen insbesondere von damit verbundenen Microseeps, bereitzustellen, bei dem unter Verwendung von Biosensoren ein zu untersuchendes Areal luftgestützt und mit hoher Geschwindigkeit sowie Genauigkeit geprüft wird. Weitere Teilaufgabe der vorliegenden Erfindung ist es ein Verfahren bereitzustellen, das eine Kartographierung der Lageorte mittels hochpräziser Georeferenzierung durchgeführt wird.

Weitere Teilaufgabe der vorliegenden Erfindung ist es ein Verfahren der zuvor genannten Art bereitzustellen, das georeferenziertes, topologisches Datenmaterial der untersuchten Areale bereitstellt.

Gelöst werden die Aufgaben durch ein Verfahren mit den Merkmalen des Anspruchs 1.

Die vorliegende Erfindung stellt ein Verfahren zur Detektion der Lage von Kohlenwasserstoffvorkommen und insbesondere Microseeps aus der Luft bereit, mittels Verwendung luftgestützter Laserscanner in Kombination von Kohlenwasserstoff sensitiven Biosensoren unter gleichzeitiger hochpräziser Georeferenzierung unter Bezugnahme auf ein digitales Geländemodell.

Aus der US-A-3 961 187 ist ein Verfahren zur Detektion von austretenden Kohlenwasserstoffen an der Meeresoberfläche bekannt, bei dem ein Laserstrahl luftgestützt auf das Meer gerichtet wird, der im Wasser an kleinen und kleinsten Teilchen Dispersion und Streuung erfährt. Die Dispersions- und Streustrahlung wird detektiert und erlaubt Rückschlüsse auf den Gehalt an kleinen Teilchen. Aus einem erhöhten Gehalt an Mikroorganismen und Sedimenten kann dann indirekt darauf geschlossen werden, dass an den entsprechenden Stellen aufsteigende Kohlenwasserstoffgase im Wasser vorhanden sind. Im Wasser vorhandene Mikroorganismen zeigen dabei bei Bestrahlung Biolumenszenz, woraus man auf deren Konzentration schließen kann.

Die vorliegende Erfindung geht aus von der an sich bekannten Verwendung von Kohlenwasserstoff sensitiven Biosensoren auf der Basis von manipulierten Mikroorganismen, nachfolgend vereinfacht Biosensoren genannt. Geeignete Biosensoren sind zuvor beschrieben.

Bei dem erfindungsgemäßen Verfahren werden wässrige Lösungen der Kulturen der Biosensoren in geeigneter Weise ausgebracht. Eine bekannte Möglichkeit zum schnellen und großflächigen Ausbringen besteht in der Verwendung von Sprühflugzeugen, die ein Aerosol oder einen Sprühnebel der wäßrigen Kultur über dem zu untersuchenden Areal ausbringen.

Es schließt sich eine Wirkperiode an, in der die als Biosensoren wirkenden Mikroorganismen mit den Kohlenwasserstoffen wechselwirken, die im Erdreich oder auf dem Erdreich der zu detektierenden Mikroseeps befinden. Nach hinreichender Wechselwirkung der Biosensoren mit den Kohlenwasserstoffen sind diese aktiviert und zur Detektion bereit. Hier setzt die vorliegende Erfindung an.

Erfindungsgemäß erfolgt die Detektion mittels luftgestütztem Laserscanner, umfassend wenigstens einen modifizierten Laser für die Anregung fluoreszenter Strahlung von Biosensoren am Boden in Kombination mit der luftgestützten Detektion und Georeferenzierung der fluoreszierenden Strahlung mittels bildgebender Verfahren des Laserscanners sowie optional der Darstellung detailgetreuer Feldkarten.

Dabei findet ein luftgestützter Laserscanner Verwendung, um während des Fluges eine kontinuierliche Höhenvermessung des überflogenen zu vermessenden Areals vorzunehmen. In grundsätzlich bekannter Weise wird durch den Laserscanner mittels Laufzeitmessungen seiner vom Boden reflektierten Laserimpulse die jeweiligen Höhen bestimmt. Gleichzeitig wird jeder einzelnen Höhenmessung eine genaue geographische Position des Luftfahrzeuges zugeordnet. Die geographische Position kann mittels DGPS (Differential Global Positioning System), insbesondere in Kombination mit einer hochpräzisen Trägheitsnavigation, bestimmt werden.

Aus den gewonnenen Höhendaten, korreliert mit den jeweiligen Positionsdaten, wird ein digitales Geländemodell hoher Auflösung erzeugt, welches das überflogene Areal in seiner Oberfläche präzise abbildet.

In einer besonderen Ausführungsform kann durch Unterscheidung zwischen einer ersten und einer letzten Reflektion eines mehrfach vom Boden reflektierten Laserimpulses zwischen der Bodenoberfläche einerseits sowie der auf der Oberfläche aufstehenden Vegetation oder anderer artefaktischer Objekte unterschieden werden. Nachfolgend wird die Darstellung der unmittelbaren Bodenoberfläche als digitales Bodenmodell und die Darstellung der Oberfläche mit Vegetation und/oder artefaktischen Objekten als digitales Oberflächenmodell bezeichnet. In dieser Ausführungsform der Erfindung besteht damit die Möglichkeit in z.B. bewaldeten Gebieten das Bodenrelief als solches darzustellen, ohne störende Darstellung der Vegetation.

In einer weiteren Ausführungsform wird der zuvor genannte luftgestützte Laserscanner mit einer digitalen Zeilenkamera kombiniert. Das so gewonnene visuelle Abbild des überflogenen Areals wird dann mit dem digitalen Bodenmodell und/oder dem digitalen Oberflächenmodell kombiniert oder überlagert. Die Anwendungsvorteile hierzu werden im Folgenden noch erläutert.

Zur Umwandlung des digitalen Höhenmodells, in das digitale Bodenmodell und/oder digitale Oberflächenmodell werden die gemessenen Datensätze einem Raster zugeordnet. Die gemessenen Datensätze bestehen dabei, wie zuvor ausgeführt, aus den Höhendaten, welche mit den geographischen Daten korreliert sind. Die Rasterweite des so gewonnenen Rasters stellt ein wesentliches Merkmal der vorliegenden Erfindung dar. Eine geeignete Rasterweite, also die horizontale Auflösung des Modells beträgt 0,25 Meter. Die übliche Rasterweite bei bekannten Explorationsverfahren mit Probenentnahmen und mikrobiologischer Exploration oder geochemischer Exploration beträgt im Regelfall zwischen 100 bis 1000 Metern. Die vorliegende Erfindung ermöglicht somit eine wesentlich höhere Auflösung für den Nachweis kleinerer Microseeps sowie deren Struktur wie Konzentration und Maxima.

Geeignete Laserscanner zum Erreichen einer horizontalen Auflösung von 0,25 Metern oder weniger sind im Markt erhältlich. Beispielhaft seien nur genannt die Laserscanner ALTM 3100 ® der Firma Optech, Kanada und Litemapper 2800 ® der Firma IGI mbH, Deutschland.

Neben der Eignung des zu verwendenden Laserscanners haben auch Flughöhe und Fluggeschwindigkeit des Laserscanners über dem Grund Auswirkungen auf die horizontale Auflösung. Es ist dem Fachmann bekannt, daß bei Überschreiten der zuvor genannten Auflösung von 0,25 Metern oder weniger die Auflösung verbessert werden kann, soweit Fluggeschwindigkeit und/oder Flughöhe verringert werden.

Ein weiterer Kunstgriff der vorliegenden Erfindung besteht darin, die Emissionswellenlänge des Lasers auf die Anregungswellenlänge der Biosensoren einzustellen. Durch diese Maßnahme werden die Biosensoren angeregt und zur Abgabe einer detektierbaren Fluoreszenzerscheinung veranlaßt, soweit sie durch den Kontakt mit Kohlenwasserstoffen aktiviert sind. Diese sogenannte Sekundärstrahlung wird in einer in Abhängigkeit der Biosensoren definierten Wellenlänge emitiert. Dabei ist die Wellenlänge der Sekundärstrahlung ungleich der Anregungswellenlänge. In Abhängigkeit des Biosensors und damit des gewählten Fluorophors ist die Sekundärstrahlung üblicherweise 30 bis 60 nm langwelliger als die Anregungsstrahlung. Hieraus ergibt sich in vorteilhafter Weise, daß bei einem Laserimpuls mit definierter Wellenlänge, die der Anregungswelle des Biosensors entspricht, zwei Signale unterschiedlicher Wellenlängen erhalten werden. Das erste Signal, d.h. das Reflektionssignal weist dabei die gleiche Wellenlänge wie die Anregungswellenlänge auf und dient in der zuvor beschriebenen Weise zur Georeferenzierung des Meßpunktes. Das zweite Signal ist langwelliger und zeigt die Anwesenheit von aktivierten Biosensoren und damit indirekt von Kohlenwasserstoffspuren am Meßpunkt an. Als Folge hiervon bedarf es nur eines Anregungssignals einer Wellenlänge. Auf die Verwendung eines zweiten Lasers mit einer anderen Wellenlänge zur Detektion des Oberflächensignals, d.h. des Reflektionssignals kann verzichtet werden.

In einer weiteren Ausführungsform können Laserimpulse unterschiedlicher Wellenlänge verwendet werden. Laserimpulse unterschiedlicher Wellenlänge im Sinne der vorliegenden Erfindung sind wenigstens zwei Laserimpulse, die zeitgleich oder nahezu zeitgleich zu einem Meßpunkt abgesendet werden, wobei einer der Laserimpulse die Anregungswellenlänge des Biosensors aufweist und der andere Laserimpuls eine davon abweichende Wellenlänge aufweist und wobei weiterhin der zuletzt genannte Laserimpuls zur Erzeugung des Oberflächensignals dient. In dieser Ausführungsform sind die Wellenlänge der Signale der Biosensoren sowie der Oberfläche weiter voneinander beabstandet. Ein größerer Abstand der Wellenlängen der zu detektierenden Signale vereinfacht die Diskriminierung und somit die Detektion.

In einer weiteren Unterausführungsform der zuletzt genannten Ausführungsform können auch mehrere Laserimpulse unterschiedlicher Wellenlänge zur Anregung der Biosensoren verwendet werden. Die zuletzt genannte Maßnahme ist zweckmäßig, soweit wenigstens zwei unterschiedliche Biosensoren gleichzeitig zum Einsatz kommen, die unterschiedliche Anregungswellenlängen aufweisen.

Soweit gemäß dieser Unterausführung zwei Biosensoren mit unterschiedlicher Anregungswellenlänge beim Einsatz Verwendung finden, so wären drei Laserimpulse mit unterschiedlichen Wellenlängen zweckmäßig. Zwei der Laserimpulse dienen dabei zur Erzeugung des Fluoreszenzsignals und der dritte zur Erzeugung der Oberflächensignals (Reflektionssignals). Soweit mehr als zwei Biosensoren mit unterschiedlicher Anregungswellenlänge zeitgleich Verwendung finden, so ist entsprechend zu verfahren.

Die zeitgleiche Verwendung von unterschiedlichen Biosensoren und damit unterschiedlicher Anregungswellenlänge kann dazu dienen Kohlenwasserstoffgemische zu detektieren, die unterschiedliche Kohlenwasserstoffe enthalten, soweit die Biosensoren selektiv für die jeweiligen Kohlenwasserstoffe sind.

In vorteilhafter Weise kann der Einsatz unterschiedlicher Biosensoren genutzt werden, um einen ersten Hinweis der Zusammensetzung der Kohlenwasserstoffe zu gewinnen. Letzteres wiederum kann Hinweise auf die Eigenschaften der Lagerstätten geben. Die zeitgleiche Verwendung von unterschiedlichen Biosensoren kann auch angezeigt sein, um unterschiedliches Ansprechverhalten der Mikroorganismen auszugleichen. Die Referenzierung mit wenigstens zwei unterschiedlichen Signalen, basierend auf zwei unterschiedlichen Biosensoren führt zu einer erhöhten Meßgenauigkeit.

Erfindungsgemäß weist der Laserscanner eine Detektionseinheit auf, die geeignet ist die Signale mit unterschiedlicher Wellenlänge diskriminierend zu detektieren. Geeigneter Weise weist die Detektionseinheit einen Wellenlängen diskriminierenden Sperrfilter auf, der geeignet ist, in hinreichend kurzen zeitlichen Abständen die Messungen in den zuvor genannten beiden Wellenlängenbereichen durchzuführen. In einer anderen Ausführungsform weist die Detektionseinrichtung zwei gesonderte Detektoren auf, die jeweils spezifisch die jeweiligen genannten Signale mit den spezifischen Wellenlängen detektieren.

In einer weiteren Ausführungsform weist der Laserscanner eine separate Laseranregung für die Biosensoren sowie eine separate Detektionseinrichtung für die Emissionswellenlänge der Biosensoren, d.h. Fluoreszenssignals auf, die beide auf der Plattform des Laserscanners integriert sind und so ebenfalls mit der Präzision des Laserscanner georeferenziert werden.

Die Vorteile aus dem zuvor Genannten liegen auf der Hand. Nach der Impfung des zu untersuchenden Areals mit den Biosensoren kann in einem einzigen Meßgang, d.h. Überflug über das zu untersuchende Areal, sowohl eine Georeferenzierung durchgeführt werden, als auch unmittelbar die darin befindlichen Lageorte insbesondere der Microseeps festgestellt werden. Ein weiterer wesentlicher Vorteil besteht darin, daß keine Meßungenauigkeiten hinsichtlich der geographischen Lage auftreten können. Das detektierte Fluoreszenzsignal korreliert unmittelbar mit dem georeferenzierenden Reflektionssignal, womit der Lagerort eindeutig in dem digitalen Bodenmodell, bzw. digitalen Oberflächenmodell angegeben ist.

Aus der Georeferenzierung ergeben sich jedoch noch weitere Vorteile. Aus dem Bereich der klassischen Exploration betreffend die Untersuchung der geologischen Eigenheiten des Untergrundes ist seit langem bekannt, daß Kohlenwasserstofflagerstätten sich vorwiegend in sogenannten tektonischen Fallenstrukturen aufbauen. Es ist ebenfalls bekannt, daß die genannten tektonischen Fallenstrukturen sich bis zur Erdoberfläche durchpausen können, wobei dieses Durchpausen eine Höhenverschiebung im Oberflächenbereich von einigen Zentimetern bis wenige Dezimeter erreichen kann. Die so erzeugten, jedoch schwer auffindbaren Oberflächenstrukturen zeigen jeweils die Charakteristika unterschiedlicher, nachfolgend noch weiter erläuterten Fallenstrukturen an. So ist es seit langem in der Exploration von Kohlenwasserstoffstätten üblich, derartige Oberflächenstrukturen mit Reliefunterschieden im Bereich von mehreren Dezimetern bis einigen Metern zu suchen und an den so aufgefunden Verdachtsflächen Probebohrungen durchzuführen. Diese Vorgehensweise hat jedoch erhebliche Nachteile, da nicht zwangsläufig jede verdächtige Oberflächenstruktur mit einer Fallenstruktur korreliert und weiterhin nicht jede Fallenstruktur auch eine Kohlenwasserstofflagerstätte darstellt. Es ist daher eine erhebliche Anzahl von erfolglosen Probebohrungen nötig, um zu einem Erfolg zu kommen.

Das erfindungsgemäße Verfahren weist nicht nur die Vorkommen von Microseeps nach, sondern korreliert diese gleichzeitig aufgrund der Georeferenzierung mit den Oberflächenstrukturen. Dem Prospektor werden somit neuartiger Weise eine Kombination von unterschiedlichsten Informationen an die Hand gegeben, nämlich die Durchpausstrukturen einerseits sowie Größe, Ort und Anzahl von Microseeps andererseits, die nicht nur zu einer verbesserten Auffindung von Kohlenwasserstofflagerstätten führt, sondern darüber hinaus auch erhebliche Rückschlüsse auf Umfang und Art der Lagerstätte ermöglichen.

So ist bei Antiklinalfallen in der Regel davon auszugehen, daß die Lichtmaxima der Microseeps die strukturell höchsten Stellen der Fallenstruktur und die Orientierung einer etwaigen Längsachse einer solchen Struktur gut nachzeichnen. Ebenso wird dies in der Regel bei Horst-Strukturen oder Überschiebungen der Fall sein. In den Fällen, in denen Störungen, wie Verwerfungen oder Überschiebungen den strukturellen Ausbau der Lagerstätte, bzw. Fallenstruktur bestimmen, ist in der Regel zu erwarten, daß diese Störungen wegen erhöhter Permeabilitäten für Kohlenwasserstoffe durch die gemessenen Lichtmaxima der Microseeps an der Oberfläche ebenso gut abgebildet werden.

Das erfindungsgemäße Verfahren zeigt aber auch wesentliche Vorteile, soweit es nicht zur Ausprägung von Oberflächenstrukturen kommt. Das erfindungsgemäße Verfahren erlaubt, wie bereits dargestellt eine großflächige aber kleinrastige Untersuchung eines Verdachtsareals auf Microseeps. Auftreten, Größe und Verteilung der Microseeps in dem untersuchten Areal geben dem Prospektor auch Hinweise auf das Vorkommen von sogenannten stratigraphischen Fallen, also Fallentypen, bei denen Wechsel in der Lithologie des Speichergesteins die Fallenstruktur bilden. Ebenso wie bei den zuvor genannten strukturellen Fallen zeigen hier die an der Oberfläche aufgefundenen Microseeps eine Abbildung der Ausdehnung der zuvor genannten stratigraphischen Fallen. Zu den stratigraphischen Fallentypen zählen beispielsweise Diskordanzfallen, auskeilende Schichten oder Linsen. Weiterhin Änderungen der Porosität und/oder Permeabilität in den Speichergesteinen. Stratigraphische Fallentypen sind durch herkömmliche seismische Untersuchungsmethoden in der Regel nicht nachzuweisen und deshalb in der Vergangenheit sehr schwierig zu explorieren gewesen.

Weitere Vorteile des erfindungsgemäßen Verfahrens sowie Systems ergeben sich aus den weiteren Ablaufschritten zur Exploration.

Im Folgenden wird das gewonnene digitale Bodenmodell und/oder digitale Oberflächenmodell mit dem nun darin verzeichneten Lageorten der detektierten Biosensoren auf ein Datendarstellungsgerät übertragen. Dabei kann optional das optional gewonnene visuelle Abbild des Areals mit dem Bodenmodell und/oder Oberflächenmodell kombiniert oder überlagert werden.

Der Prospektor ist anhand des dargestellten Datenmaterials in der Lage mit hoher Sicherheit Lagestandorte der detektierten Biosensoren und damit im folgenden höffige Standorte für Kohlenwasserstofflagerstätten festzustellen. Weiterhin erlaubt das erfindungsgemäße Verfahren die Übertragung der zuvor genannten Daten auf tragbare Datendarstellungsgeräte, z.B. einen Laptop. Hieraus ergibt sich in vorteilhafter Weise, daß der Prospektor sicher und schnell an den Ort der durch das luftgestützte Verfahren aufgefunden Microseeps geführt wird, um vor Ort weitere Untersuchungen mit herkömmlichen Methoden durchzuführen.

Dabei kann sich der Prospektor mittels des auf dem tragbaren Datensichtgerätes dargestellten Bodenmodell und/oder Oberflächenmodell, insbesondere in Kombination mit der optionalen visuellen Darstellung sicher durch das Areal bewegen. Die jeweiligen Lageorte der detektierten Biosensoren können aus der Darstellung entnommen werden.

Bereits das reine digitale Bodenmodell gibt die Oberfläche des Areals detailreich wieder und erlaubt somit eine sichere Orientierung unabhängig von Koordinatenangaben. Durch visuellen Abgleich zwischen dem digitalen Bodenmodell und der Realität des Areals sind prägnante Strukturen sicher wiedererkennbar und in Relation zu Lagerorten zu setzen.

Das digitale Oberflächenmodell weist ergänzend zu dem digitalen Bodenmodell detailreich die aufstehende Vegetation sowie alle künstlichen Objekte aus. Dazu gehören im Bereich der Vegetation als gut wiedererkennende Referenzobjekte beispielsweise Bäume, Hecken sowie Waldränder. Bei den künstlichen, d.h. artefaktischen Objekten, werden insbesondere Zäune, einzelne Zaunpfähle, Mauereinfriedungen, Häuser, Schuppen, Brunnenanlagen, Masten aller Art sowie , semipermanente Objekte die Orientierung im Gelände zusätzlich erleichtern.

## Patentansprüche

1. Verfahren zur luftgestützten Exploration von Kohlenwasserstofflagerstätten, insbesondere Erdgas- und/oder Erdöllagerstätten, mittels fluoreszenzfähiger Biosensoren, umfassend die Schritte:
a) Ausbringen der Biosensoren in Form von *gentechnisch* manipulierten Mikroorganismen auf die Bodenoberfläche des zu untersuchenden Areals,
b) Wechselwirken lassen der Biosensoren mit Kohlenwasserstoffspuren zu ihrer Aktivierung, **gekennzeichnet durch** die folgenden Schritte,
c) Anregung der Biosensoren mittels Laserstrahl eines luftgestützten Laserscanners,
d) Gleichzeitige diskrimierende Detektion des Fluoreszenzsignals der Biosensoren sowie des Oberflächenreflektionssignals des Laserstrahles,
e) Erstellen eines digitalen ***Gelände***modells anhand des Oberflächenreflektionssignals und einbinden des Fluoreszenzsignals in das digitale Geländemodell,
f) Darstellung des digitalen ***Gelände***modells auf einem Datensichtgerät oder als Kartenmaterial.

2. Verfahren nach Anspruch 1, **dadurch gekennzeichnet, dass** die in Schritt d) detektierten Signale georeferenziert werden.

3. Verfahren nach Anspruch 1 oder 2, **dadurch gekennzeichnet, dass** in Schritt d) weiterhin ein visuelles Geländeabbild aufgenommen wird, das weiterhin in Schritt e) mit dem digitalen Geländemodell überlagert wird.

4. Verfahren nach einem der Ansprüche 1 bis 3, **dadurch gekennzeichnet, dass** das digitale Geländemodell ein digitales Bodenmodell *oder ein digitales Oberflächenmodell* ist.

5. Verfahren nach einem der vorhergehenden Ansprüche, **dadurch gekennzeichnet, dass** der Laserstrahl zur Anregung des Oberflächenreflektionssignals sowie des Fluoreszenzsignals die gleiche Wellenlänge aufweist.

6. Verfahren nach einem der Ansprüche 1 bis 5, **dadurch gekennzeichnet, dass** der Laserstrahl zur Anregung des Oberflächenreflektionssignals sowie des Fluoreszenzsignals eine unterschiedliche Wellenlänge aufweist.

## Claims

1. Method for the airborne exploration of hydrocarbon deposits, particularly natural gas and/or mineral oil deposits, by means of fluorescent biosensors, comprising the steps:
a) lowering the biosensors in the form of genetically manipulated micro-organisms onto the bottom surface of the area to be investigated,
b) allowing the biosensors to interact with hydrocarbon traces for their activation, **characterised by** the following steps,
c) stimulating the biosensors by means of the laser beam of an airborne laser scanner,
d) simultaneous discriminating detection of the fluorescent signal of the biosensors and also the surface reflection signal of the laser beam,
e) creating a digital terrain model on the basis of the surface reflection signal and embedding of the fluorescent signal into the digital terrain model,
f) displaying of the digital terrain model on a visual display unit or as maps.

2. Method according to Claim 1, **characterised in that** the signals detected in step d) are georeferenced.

3. Method according to Claim 1 or 2, **characterised in that** in step d), a visual terrain image is furthermore taken, which is furthermore overlaid with the digital terrain model in step e).

4. Method according to any one of Claims 1 to 3, **characterised in that** the digital terrain model is a digital ground model or a digital surface model.

5. Method according to any one of the preceding claims, **characterised in that** the laser beam for stimulating the surface reflection signal and also the fluorescent signal has the same wavelength.

6. Method according to any one of Claims 1 to 5, **characterised in that** the laser beam for stimulating the surface reflection signal and also the fluorescent signal has a different wavelength.

## Revendications

1. Procédé d'exploration aéroporté de gisements d'hydrocarbures, en particulier de gisements de gaz naturel et/ou de pétrole, au moyen de biocapteurs aptes à émettre une fluorescence, comprenant les étapes consistant à :
a) épandre les biocapteurs sous forme de micro-organismes génétiquement manipulés, sur la surface du sol de l'aire à examiner,
b) faire interagir lesdits biocapteurs avec des traces d'hydrocarbures pour les activer, **caractérisé par** les étapes suivantes :
c) excitation desdits biocapteurs par l'intermédiaire d'un rayon laser d'un scanner à laser aéroporté,
d) détection discriminante simultanée du signal de fluorescence des biocapteurs ainsi que du signal de réflexion de surface du rayon laser,
e) création d'un modèle numérique de terrain à partir du signal de réflexion de surface et intégration du signal de fluorescence au modèle numérique de terrain,
f) représentation du modèle numérique de terrain sur une unité de visualisation ou sous forme de cartes.

2. Procédé selon la revendication 1, **caractérisé par le fait que** les signaux détectés à l'étape d) sont géoréférencés.

3. Procédé selon la revendication 1 ou 2, **caractérisé par le fait que**, en outre à l'étape d), on prend une image visuelle du terrain à laquelle, en sus à l'étape e), est superposé ledit modèle numérique de terrain

4. Procédé selon l'une quelconque des revendications 1 à 3, **caractérisé par le fait que** ledit modèle numérique de terrain est un modèle numérique de sol ou un modèle numérique de surface.

5. Procédé selon l'une quelconque des revendications précédentes, **caractérisé par le fait que** le rayon laser destiné à exciter le signal de réflexion de surface ainsi que le signal de fluorescence présente la même longueur d'onde.

6. Procédé selon l'une quelconque des revendications 1 à 5, **caractérisé par le fait que** le rayon laser destiné à exciter le signal de réflexion de surface ainsi que le signal de fluorescence présente une longueur d'onde différente.
